# NEUE EUROPÄISCHE PATENTSCHRIFT

(11) **EP 1 562 758 B2**
(45) Veröffentlichungstag und Bekanntmachung des Hinweises auf die Entscheidung über den Einspruch: **06.07.2011**
(45) Hinweis auf die Patenterteilung: 12.04.2006
(21) Anmeldenummer: 03775319.1
(22) Anmeldetag: 07.11.2003
(51) Int. Cl.: B42D 15/10

(54) **OPTISCH VARIABLES ELEMENT UND DESSEN VERWENDUNG**
OPTICALLY VARIABLE ELEMENT AND THE USE THEREOF
ELEMENT OPTIQUEMENT VARIABLE ET SON UTILISATION

(30) Priorität: 22.11.2002 DE 10254500
(43) Veröffentlichungstag der Anmeldung: 17.08.2005
(73) Patentinhaber: OVD Kinegram AG, 6301 Zug (CH)
(72) Erfinder: TOMPKIN, Wayne, Robert, CH-5400 Baden (CH); SCHILLING, Andreas, 6332 Hagendorn (ZG) (CH)
(74) Vertreter: Zinsinger, Norbert
(86) Internationale Anmeldenummer: PCT/EP2003/012452
(87) Internationale Veröffentlichungsnummer: WO 2004/048119

(56) Entgegenhaltungen:
- EP-A2- 1 513 692
- US-A- 6 016 225
- US-A- 6 036 807
- M.T. GALE: 'Micro-optics:Elements, systems and applications' DIRECT WRITING OF CONTINUOUS-RELIEF MICRO-OPTICS 1997,
- M.B. STERN: 'Micro-optics: Elements, systems and applications' BINARY OPTICS FABRICATION 1997,

## Beschreibung

Die Erfindung betrifft ein optisch variables Element, das wenigstens in Teilflächen eine, vorzugsweise zwischen zwei Schichten eines Schichtverbundes eingebettete, eine gegenüber einer gedachten Referenzfläche räumlich vor-und/oder zurückspringende, optisch wirksame Struktur bildende Grenzfläche aufweist, wobei die optisch wirksame Struktur wenigstens eine für einen Betrachter dreidimensional erscheinende Freiformfläche in Form eines alphanumerischen Zeichens, einer geometrischen Figur oder eines sonstigen Objekts aufweist.

Optisch variable Elemente der vorstehend beschriebenen Art werden beispielsweise als Sicherheitselemente zur Authentifikation oder Identifikation von Wertdokumenten, z.B. Banknoten, Schecks, etc., von Ausweisen, von Kreditkarten oder von sonstigen zu sichernden Gegenständen verwendet. Auch für dekorative Zwecke werden solche optisch variablen Elemente bereits eingesetzt, wobei die Grenze zwischen Verwendung als Sicherheitselement und Dekorationselement häufig fliessend ist. Es wird dabei insbesondere häufig verlangt, dass Sicherheitselemente auch eine gewisse dekorative Wirkung aufweisen, was beispielsweise dann gilt, wenn es darum geht, die Echtheit von bestimmten Artikeln, z.B. Zigaretten, wertvollen kosmetischen Präparaten, etc. durch entsprechende Elemente zu gewährleisten.

Zur Verwendung als Sicherheits- oder dekoratives Element werden die bekannten optisch variablen Elemente meist in Form von Transferfolien, insbesondere Heissprägefolien, oder in Form von Laminierfolien auf das entsprechende Substrat aufgebracht, wobei die die optisch wirksame Struktur bildende Grenzfläche dann zwischen zwei entsprechenden Lackschichten vorgesehen ist. Bei Transferfolien sind diese Lackschichten Teil der vom Trägefilm auf das Substrat übertragbaren Dekorschicht-Anordnung, *wobei* anstelle einer Lackschicht auch eine Kleberschicht vorgesehen oder die Lackschicht Klebereigenschaften aufweisen kann. Bei Laminierfolien werden die Grenzflächen prinzipiell in gleicher Weise erzeugt. Der Unterschied zwischen Laminier- und Transferfolien ist jedoch darin zu sehen, dass bei Laminierfolien die als Dekorationselement dienenden Lack-und ggf. Klebeschichten auf dem Trägerfilm verbleiben, wenn die Laminierfolie auf ein Substrat aufgebracht wird. Schliesslich ist es auch denkbar, Verpackungs-oder Dekorationsfolien grundsätzlich wie Laminierfolien auszubilden, jedoch diese Folien, beispielsweise für Verpackungszwecke, als solche zu verwenden, ohne dass sie auf ein Substrat auflaminiert werden.

In diesem Zusammenhang ist es auch bereits bekannt, über eine entsprechende Strukturierung der Grenzfläche zwischen zwei Schichten, insbesondere Lackschichten, oder gegenüber Luft, dreidimensionale Effekte zu erzeugen. Beispielsweise sind Scheck- und Kreditkarten bekannt, bei denen bestimmte Objekte abhängig vom Betrachtungswinkel in unterschiedlichen Positionen oder Perspektiven erscheinen, oder beim Betrachter der Eindruck erweckt wird, als ob sich das entsprechende Objekt dreidimensional aus der Oberfläche des Trägers für das optisch variable Element herausheben würde.

Diese dreidimensionalen Effekte werden bisher meist holographisch erzeugt, wobei diese Vorgehensweise zum einen den Nachteil hat, dass für die Herstellung der für eine Replikation in entsprechende Schichten erforderlichen Master ein vergleichsweise grosser apparativer Aufwand zu betreiben ist. Darüber hinaus haben holographisch erzeugte Strukturen auch erhebliche optische Nachteile. Insbesondere ist ihre Brillanz häufig mangelhaft. Darüber hinaus besteht im allgemeinen keine Möglichkeit, die Attraktivität eines entsprechend optisch variablen Elementes dadurch zu steigern, dass bestimmte Farbeffekte erzielt werden.

Der Erfindung liegt die Aufgabe zugrunde, ein optisch variables Element vorzuschlagen, das sich mit den unterschiedlichsten, für die Erzeugung von optisch wirksamen Strukturen bekannten Verfahren leicht herstellen lässt, bisher nicht bekannte Effekte für den Betrachter zeigt und darüber hinaus in der Gestaltung dem Designer eine Vielzahl von Variationsmöglichkeiten bietet.

Diese Aufgabe wird bei einem gattungsgemässen optisch variablen Element erfindungsgemäss durch eine Aüsbildung gemäß Anspruch 1 gelöst.

Während also bisher die dreidimensionalen Freiformflächen, beispielweise Vögel, Buchstaben- oder Zeichenkombinationen, Bilder von Personen, Gebirge, etc. lediglich so erschienen, als ob sie entweder ihre Position bei Veränderung des Betrachtungswinkels ändern würden oder über der Oberfläche des Substrats zu schweben schienen, werden erfindungsgemäss völlig unterschiedliche optische Effekte vorgeschlagen, nämlich die Ausbildung des optisch variablen Elementes derart, dass der die Freiformfläche, beispielsweise Buchstaben, Zahlen, aber auch irgendwelche sonstigen Objekte, Logos, etc. bildende Bereich so erscheint, als ob er gegenüber der Substrat-Oberfläche vorgewölbt wäre oder zurückspringen würde, d.h. so, als ob im Bereich der Freiformfläche eine gewölbte Oberfläche vorhanden wäre. Hierdurch entsteht für den Betrachter ein völlig neuartiger, bisher nicht bekannter Effekt für die optisch wirksame Struktur, nämlich der einer gewissen räumlichen Tiefe, wobei sich zusätzlich bei geeigneter Ausbildung und Anordnung des linsenartig gestalteten Teilbereiches der Grenzfläche besonders charakteristische optische Effekte erzielen lassen, die den Wiedererkennungswert und damit die Identifikationswirkung entsprechender optisch variabler Elemente stark erhöhen.

Es ist zu berücksichtigen, dass die Schichten, zwischen denen die die optisch wirksame Struktur bildende Grenzfläche angeordnet ist, üblicherweise Lackschichten sind, die normalerweise nur eine sehr begrenzte Dicke aufweisen können. Um auch bei Vorliegen verhältnismässig dünner Lack-oder Kleberschichten den erfindungsgemäss angestrebten Effekt erzielen zu können, ist die Freiformfläche als diffraktives Freiformelement mit einer Gitterstruktur, deren Gittertiefe höchstens 10 µm beträgt, ausgebildet, welches im wesentlichen den Umrisslinien der Freiformfläche folgende Gitterlinien aufweist, wobei sich der Abstand der Gitterlinien vom Mittelbereich der Freiformfläche aus zu deren Rand hin, kontinuierlich verändert, d.h. entweder vermindert oder vergrössert.

In einer Ausgestaltung des optisch variablen Elementes gemäss der Erfindung kann die Gitterstruktur des Freiformelementes derart gestaltet sein, dass die jeweils einen Flanken ihrer Gitterfurchen parallel zueinander und etwa parallel zu einer Senkrechten auf die (gedachte) Referenzfläche verlaufen, während sich der Winkel der jeweils anderen Flanken der Gitterfurchen gegenüber der Senkrechten auf die Referenzfläche in einer Richtung quer zu den Gitterlinien im wesentlichen kontinuierlich von Gitterfurche zu Gitterfurche ändert, wobei als selbstverständlich unterstellt wird, dass die Gitterfurchen einen sich verjüngenden Querschnitt aufweisen.

Die Herstellung derartiger Gitterstrukturen erfolgt vorzugsweise im Wege des sog. "Direkt-Schreibens" mittels Laser- oder Elektronenstrahl-Lithographie-Maschinen, deren Verwendung es gestattet, ganz bestimmte Gitterstrukturen zu erzeugen, d.h. tatsächlich genau den angestrebten optischen Effekt für das Freiformelement zu erzeugen.

Es ist allerdings auch denkbar, die vorerwähnte Gitterstruktur mit Gitterfurchen, deren Flanken unter einem Winkel gegeneinander angeordnet sind, in anderer Weise als durch "Direkt-Einschreiben" zu erzeugen, nämlich dann, wenn die unter einem Winkel zu der Senkrechten auf die Referenzfläche verlaufenden Flanken der Gitterfurchen stufenförmig gestaltet sind, wobei durch die die Stufen bildenden Flächen die - unter einem Winkel zu der Senkrechten auf die Referenzfläche verlaufenden - Flanken in ihrer optischen Wirkung angenähert sind. Bei einer derartigen Ausbildung der Flanken der Gitterfurchen kann beispielsweise auch mittels Masken gearbeitet werden, wobei die Feinheit der stufenförmigen Auflösung der (schrägen) Flanken von der Zahl der verwendeten Masken, d.h. der gewünschten Stufen, abhängt. Dabei genügt für eine Vielzahl von Anwendungsfällen bereits eine Aufteilung der entsprechenden Flanken in vier oder acht Stufen. Bei hohen Qualitätsanforderungen ist es aber auch möglich, beispielsweise vierundsechzig Stufen vorzusehen, für deren Ausbildung eine entsprechende Anzahl von Belichtungsvorgängen unter Verwendung unterschiedlicher Masken notwendig ist.

Eine unter Umständen sehr einfache Herstellung der Gitterstruktur des Freiformelementes lässt sich dann erreichen, wenn die Gitterstruktur eine BinärStruktur ist, die im wesentlichen rechteckige Gitterfurchen und Gitterstege aufweist, wobei vorzugsweise die Ausbildung derart ist, dass die Tiefe der Gitterfurchen der Gitterstruktur der Freiformelemente über die gesamte Freiformfläche etwa gleich ist, d.h. die Veränderung der "Brechkraft" (Beugung des Lichtes in unterschiedliche Richtungen) lediglich dadurch erreicht wird, dass die Breite der Gitterfurchen und/oder Gitterstege entsprechend variiert wird.

Eine Besonderheit der von Gitterstrukturen gebildeten diffraktiven *Freiform*elemente gemäss der Erfindung ist darin zu sehen, dass derartige diffraktive Linsenstrukturen - anders als refraktive Linsen - abhängig von der für die Beleuchtung oder Betrachtung des Objekts jeweils verwendeten LichtWellenlänge einen verschiedenen visuellen Eindruck erzeugen, wodurch sich wiederum besondere Design- oder Sicherheits-Effekte erzielen lassen.

Es ist grundsätzlich denkbar, ein optisch variables Element, das im wesentlichen eine erfindungsgemäss gestaltete Freiformfläche aufweist, als Sicherheits- oder Dekorationselement zu verwenden. Vorteilhafterweise ist jedoch die Freiformfläche Teil einer optisch wirksamen Gesamt-Strukturanordnung, die neben dem Freiformelement Teilbereiche mit für den Betrachter unterschiedliche optische Effekte erzeugenden, optisch variablen Elementen umfasst. Beispielsweise kann ein Freiformelement mit den üblichen beugungsoptisch wirksamen Strukturen kombiniert werden, wie sie z.B. bekannt sind, um Bewegungseffekte, Flips, Wechsel zwischen zwei unterschiedlichen Darstellungen, etc. zu erzeugen. Selbstverständlich ist es auch möglich, in einem optisch variablen Elemente mehrere Freiformelemente zu kombinieren, beispielsweise ein Wort oder eine Zahl aus jeweils ein eigenes Freiformelement bildenden Buchstaben oder Ziffern zusammenzusetzen, wodurch dann der Eindruck erzielt wird, als ob das Wort oder die Zahl plastisch gegenüber dem Rest des optisch variablen Elementes hervorgehoben wären. Interessante Effekte ergeben sich auch, wenn mehrere Freiformelemente ineinander quasi verschachtelt werden, so dass dann bei verschiedenen Beleuchtungs- oder Betrachtungsrichtungen jeweils die unterschiedlichen Freiformelemente sichtbar sind. Grundsätzlich besteht hier eine derartige Vielzahl von Kombinationsmöglichkeiten, beispielsweise auch mit Matteffekten, Spiegelflächen, etc., dass von einer näheren Erläuterung abgesehen werden soll.

Eine besonders interessante Möglichkeit ist die, die optisch wirksame Struktur vollständig oder bereichsweise mit einer Dünnschicht-Anordnung zu kombinieren, wodurch abhängig vom Betrachtungswinkel gezielte Farbwechsel erreicht werden können. Weitere spezielle Effekte lassen sich durch die Verwendung von Halbleiterschichten erzielen.

Es ist erfindungsgemäss weiter vorgesehen, dass die die optisch wirksame Struktur bildende Grenzfläche zumindest bereichsweise mit einer reflexionserhöhenden Beschichtung versehen ist, die, wenn die Beobachtung des entsprechenden Effektes tatsächlich nur im Drauflicht, d.h. in Reflexion, geschehen soll, zweckmässig von einer Metallschicht gebildet ist. Allerdings ist es auch denkbar, statt der Metallschicht als reflexionserhöhende Beschichtung eine dielektrische Schicht mit einem gegenüber den angrenzenden Schichten entsprechend unterschiedlichen Brechungsindex vorzusehen oder aber auch eine entsprechend konfigurierte Mehrschicht-Anordnung oder Halbleiter-Beschichtung.

Eine Betonung des Freiformelementes lässt sich erfindungsgemäss in einfacher Weise dadurch erreichen, dass die reflexionserhöhende Beschichtung in Passerung zu dem wenigstens einen Freiformelement vorgesehen ist, wobei die Passerung entweder derart sein kann, dass die reflexionserhöhende Beschichtung nur im Bereich des Freiformelementes vorhanden ist, oder aber auch derart, dass gerade im Bereich des Freiformelementes keine reflexionserhöhende Beschichtung vorhanden ist, sondern nur in dem das Freiformelement umgebenden Bereich des optisch variablen Elementes. Diese Ausbildung kann beispielsweise dann sehr vorteilhaft sein, wenn um das Freiformelement herum Elemente bzw. Strukturen vorgesehen sind, die nur in Reflexion sehr deutlich erkennbare Effekte hervorrufen, beispielsweise Bewegungseffekte, Bildwechsel, etc..

Die Passerung der reflexionserhöhenden Beschichtung lässt sich dann, wenn als Beschichtung eine Metallschicht dient, in einfacher Weise durch die an sich bekannten Verfahren der bereichsweisen Demetallisierung der Grenzschicht erzeugen.

Wie vorstehenden Darlegungen entnommen werden kann, kann das optisch variable Element gemäss der Erfindung in unterschiedlicher Weise und für die unterschiedlichsten Zwecke eingesetzt werden. Besonders vorteilhaft ist jedoch die Verwendung eines optisch variablen Elementes gemäss der Erfindung als Sicherheitselement gegen Fälschung von Wertdokumenten oder für zu sichernde Gegenstände, vor allem auch deswegen, weil die erfindungsgemäss vorgesehenen linsenartigen Freiformelemente die Möglichkeit bieten, zusätzliche Identifikations- bzw. Sicherungsmerkmale in das Sicherheitselement einzubringen, die sich von den bisher für Sicherheitselemente bekannten Merkmalen in neuartiger Weise und damit für den Benutzer des entsprechenden Wertdokumentes oder zu sichernden Gegenstandes auffallender Weise unterscheiden.

Die Verwendung eines optisch variablen Elementes nach der Erfindung als Sicherheitselement erfolgt vorteilhafterweise derart, dass das optisch variable Element in die auf ein Substrat übertragbare Dekorschicht-Anordnung einer Transferfolie, insbesondere einer Heissprägefolie, oder in die Dekorschicht-Anordnung einer Laminierfolie inkorporiert ist, weil auf diese Weise entweder die Übertragung auf ein Substrat oder die Erzeugung von Etiketten etc. in einer erfindungsgemässen Gestaltung erleichtert wird.

Weitere Merkmale, Einzelheiten und Vorteile der Erfindung ergeben sich aus der folgenden Beschreibung anhand der Zeichnung.

Es zeigen -:
- Figur 1a: schematisch einen Schnitt durch eine refraktive Linse,
- Figur 1b: einen Schnitt durch eine entsprechende diffraktive Linse mit im Querschnitt etwa dreieckförmigen Gitterfurchen,
- Figur 1c: eine diffraktive Linse ähnlich Figur 1b mit einer diffraktiven Binärstruktur,
- Figur 2a: perspektivisch eine wellenartige Freiformfläche,
- Figur 2b: eine - stark schematisierte und vergröberte - Draufsicht auf die Freiformfläche der Figur 2a als diffraktives Freiformelement mit einer Gitterstruktur gemäss Figur 1b,
- Figur 2c: eine Draufsicht entsprechend Figur 2b, jedoch bei einem Freiformelement mit diffraktiver Binärstruktur gemäss Figur 1c,
- Figur 3a: perspektivisch eine Freiformfläche in Form eines Tropfens in refraktiver Ausbildung,
- Figur 3b: eine graphische Darstellung des Verlaufes der Grenzfläche der tropfenförmigen Freiformfläche gemäss Figur 3a,
- Figuren 4a und 4b: Darstellungen entsprechend Figuren 3a und 3b, jedoch bei Ausführung der Tropfen-Freiformfläche als diffraktives Freiformelement mit im Querschnitt etwa dreieckförmigen Gitterfurchen,
- Figuren 5a und 5b: Darstellungen entsprechend Figuren 3a und 3b bzw. 4a und 4b, jedoch bei Ausbildung des Freiformelementes als diffraktive Binärstruktur,
- Figuren 6a und 6b: Darstellungen entsprechend Figur 3a und 3b für eine ringförmige Freiformfläche,
- Figuren 7a, 7b und 7c: Darstellungen bezüglich der ringförmigen Freiformfläche entsprechend Figuren 4a, 4b und 5b der tropfenförmigen Freiformfläche,
- Figuren 8a und 8b: Darstellungen einer L-förmigen Freiformfläche entsprechend den Figuren 3a und 3b bzw. 5a und 5b (Tropfen und Ring),
- Figuren 9a, 9b und 9c: Darstellungen entsprechend den Figuren 7a, 7b und 7c für die L-förmige Freiformfläche,
und
- Figur 10: in Draufsicht ein optisch variables Element mit einem die Freiformfläche bildenden Gewebemuster.

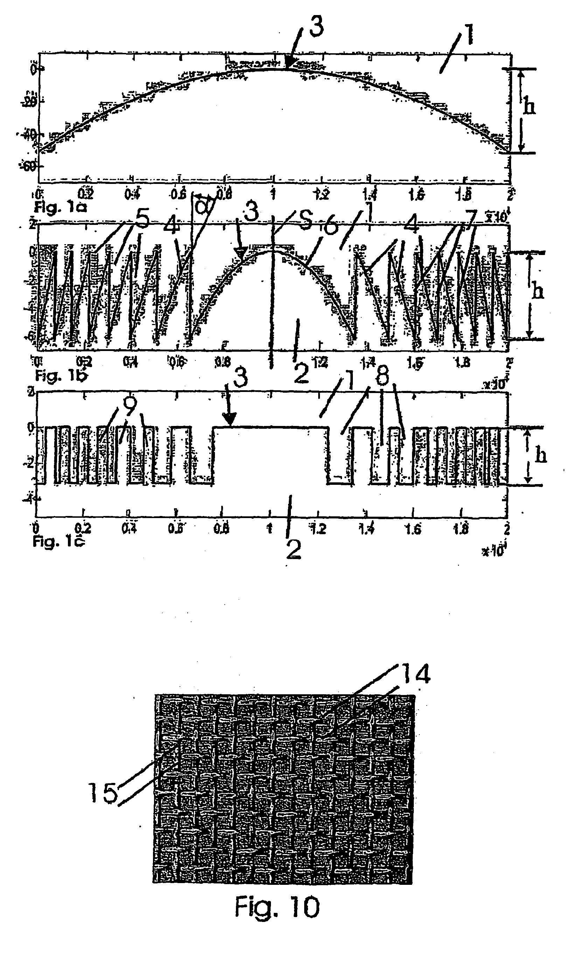

Die stark schematisierten und relativ groben Darstellungen der Figuren 1a bis 1c zeigen jeweils den linsenartig wirkenden Teilbereich eines optisch variablen Elementes, bei dem zwischen zwei Schichten 1, 2, bei denen es sich um allgemeinen um Lackschichten handelt, eine Grenzfläche 3 gebildet ist, die meist mit einer reflexionserhöhenden, in der Zeichnung nicht extra dargestellten Beschichtung, beispielsweise einer Metallisierung in Form einer im Vakuum aufgedampften Metallschicht versehen ist. Dabei ist auf der x-Achse der Figuren 1a bis 1c die Abmessung des entsprechenden Linsenelementes in der jeweiligen Richtung dargestellt, wobei es sich bei den Einheiten der Figuren 1a bis 1c um beliebig angenommene Einheiten handelt, da es auf die genaue Grösse bzw. den genauen Durchmesser der Linsenelemente nicht ankommt. Im allgemeinen liegen die entsprechenden Abmessungen der Linsenelemente bzw. der von den Linsenelementen gebildeten Freiformelemente jedoch zwischen 0,15 und 300 mm, vorzugsweise zwischen 3 und 50 mm.

Auf der y-*Achse* der Figuren 1a bis 1c ist jeweils die Dicke bzw. die Höhe der entsprechenden Schichten 1, 2 bzw. der von der Grenzfläche 3 gebildeten Struktur bzw. refraktiven Fläche aufgetragen, wobei es sich bei den angegebenen Werten um die Phasendifferenz in Radiant handelt. Bei Verwendung einer bestimmten Wellenlänge (z.B. 550 nm für die maximale Empfindlichkeit des menschlichen Auges) lässt sich aus dieser Phasendifferenz in bekannter Weise (auch unter Berücksichtigung der jeweiligen Brechungsindizes) die tatsächliche geometrische Tiefe berechnen.

Wenn man die Figur 1a mit den Figuren 1b und 1c vergleicht, ist erkennbar, dass die Dicke des optisch variablen Elementes gemäss Figur 1a wenigstens zehnmal so gross sein muss wie die Dicke der das optisch variable Element bildenden Schichtanordnung gemäss Figur 1b und sogar zwanzigmal so gross wie die Dicke der Schichtanordnung der Figur 1c. Dass die das optisch variable Element bildenden Schichtanordnungen der Figuren 1b und 1c wesentlich dünner sein können als die der Figur 1a beruht dabei auf der geringeren Gesamthöhe h der von der Grenzschicht 3 bestimmten, die Linsenwirkung erzeugenden Struktur, die sich nur über eine Höhe h erstreckt, die umgerechnet (für ein System n = 1,5 / n = 1 in Transmission) bei Figur 1b etwa der doppelten Wellenlänge, in Figur 1c sogar nur etwa der einfachen Wellenlänge entspricht. Jedenfalls ist bei den diffraktiven Linsenelementen der Figuren 1b und 1c die Höhe h, d.h. die Gittertiefe, nicht grösser als 10 µm.

Wie bereits erwähnt, handelt es sich bei den Schichten 1 und 2 im allgemeinen um Lackschichten entsprechender Zusammensetzung, wobei wenigstens die dem Beobachter zugekehrte Lackschicht (im vorliegenden Falle im allgemeinen die Schicht 1) weitgehend transparent sein muss, wobei allerdings auch die Möglichkeit besteht, die Lackschichten bei weitgehender Wahrung der Transparenz einzufärben. Für bestimmte Anwendungsfälle kann eine der Schichten 1, 2 auch eine Kleberschicht sein oder zumindest eine entsprechende Klebereigenschaften aufweisende Lackschicht.

Wenn die Grenzschicht 3 mit einer Metallisierung oder einer sonstigen, stark reflektierenden Beschichtung versehen ist, kann die Schicht 2 zwar ebenfalls transparent, jedoch auch durchscheinend oder undurchsichtig sein. Soll dagegen das optisch variable Element gemäss der Erfindung in Transmission eingesetzt werden, beispielsweise zur Abdeckung eines auf einem Substrat vorhandenen sichtbaren Merkmales, muss auch die Schicht 2 transparent sein. In diesem Fall wird die Grenzfläche nicht mit einer - im allgemeinen undurchsichtigen - Metallisierung versehen werden. Stattdessen wird man den Brechungsindex der beiden transparenten Schichten 1 und 2 derart unterschiedlich wählen (wobei die Differenz der Brechungsindizes vorzugsweise wenigstens 0,2 betragen sollte), dass trotz Verwendung zweier transparenter Schichten der durch die Grenzfläche 3 erzeugte optische Effekt hinreichend deutlich sichtbar wird.

Wenn es dabei Schwierigkeiten bereitet, einen hinreichend hohen Unterschied im Brechungsindex der Schichten zu verwirklichen, wäre es im Rahmen der Erfindung auch denkbar, die Gitterfurchen der Freiformelemente mit einem transparenten Material teilweise oder weitgehend zu verfüllen, das einen entsprechend stark differierenden Brechungsindex aufweist, bevor die durchgehende, zum Betrachter weisende Schicht aufgebracht wird.

Der für die Erzeugung des Linsenelementes gemäss Figur 1a in einem - grundsätzlich bekannten - Replikationsverfahren notwendige Master lässt sich im Hinblick auf die im Vergleich zu den Strukturen der Linsenelemente der Figuren 1b und 1c wesentlich grösseren Abmessungen verhältnismässig leicht durch mechanische Präzisions-Abtragverfahren herstellen.

Die diffraktive Gitterstruktur des Linsenelementes der Figur 1b wird üblicherweise in einem sog. "Direkt-Schreibverfahren" erzeugt, d.h. in einem Verfahren, bei dem entweder mittels eines Lasers das Material gemäss dem gewünschten Profil abgetragen wird oder mittels eines Lasers oder einer Elektronenstrahl-Lithographieeinrichtung ein Photoresist gemäss dem gewünschten Profil belichtet wird und anschliessend durch Entwicklung des Photoresists das gewünschte Profil bzw. dessen Negativprofil erhalten wird. Diese Vorgehensweise bietet den Vorteil, dass sich sehr unterschiedliche Gitterstrukturen und insbesondere Gitterquerschnitte, z.B. auch für bestimmte Anwendungsfälle sog. Blaze-Gitter, erzeugen lassen, wobei insbesondere erreicht werden kann, dass der Winkel α zwischen den in Figur 1b schräg verlaufenden Flanken 4 der Gitterfurchen 5 und einer Senkrechten S auf eine parallel zur x-Achse verlaufende, gedachte Referenzfläche der das Linsenelement bildenden Gitterstruktur sich - wie aus Figur 1b deutlich ersichtlich - kontinuierlich vom paraboloidförmigen Mittelbereich 6 der das Linsenelement bildenden Grenzfläche 3 aus nach aussen verändert, und zwar in dem Sinn, dass bei dem gezeigten Ausführungsbeispiel die zu der Senkrechten S etwa parallelen Flanken 7 der Gitterfurchen 5 gleichsam nur Unstetigkeitsstellen in einem ansonsten im wesentlichen stetigen Linsenprofil, welches durch die aufeinanderfolgenden schrägen Flanken 4 der Gitterfurchen 5 sowie den zentrischen, paraboloidförmigen Abschnitt 6 der Grenzfläche 3 gebildet ist, darstellen.

Derartige Linsenstrukturen sowie die Art ihrer Berechnung sind grundsätzlich in der einschlägigen Fachliteratur beschrieben, weshalb hierauf nicht näher eingegangen werden soll.

Dabei ist auch die Möglichkeit zu erwähnen, anstelle der gemäss Figur 1b über die Höhe h kontinuierlichen schrägen Flanken 4 eine stufenförmige Anordnung zu verwenden, bei welcher die die Stufen bildenden Flächen die Flanken 4 in ihrer optischen Wirkung annähern. Derartige Gitterstrukturen können sowohl in sog. Direkt-Schreibverfahren als auch über geeignete Masken-Techniken erzeugt werden, wobei die Zahl der Stufen abhängig von dem angestrebten Ergebnis variiert werden kann. Für eine Vielzahl von Anwendungsfällen genügt dabei bereits eine Aufteilung in vier oder acht Stufen. Bei hohen Qualitätsanforderungen ist es aber beispielsweise auch möglich, vierundsechzig Stufen oder eine Stufenzahl gemäss einer höheren Potenz von 2 vorzusehen.

In Figur 1c ist ein Linsenelement schematisch dargestellt, das von einer sog. Binärstruktur gebildet ist. Das wesentliche Charakteristikum der Binärstruktur gemäss Figur 1c ist dabei darin zu sehen, dass sowohl die Gitterfurchen 8 als auch die Gitterstege 9 jeweils im Querschnitt im wesentlichen rechteckig sind. Binärstrukturen gemäss Figur 1c werden dabei üblicherweise unter Verwendung entsprechender Masken hergestellt, wobei in diesem Zusammenhang die weitere Besonderheit der Struktur gemäss Figur 1c vorteilhaft ist, dass nämlich die Gittertiefe h der Gitterstruktur über das gesamte Linsenelement einheitlich ist, so dass bei der Herstellung der zugehörigen Master weder unterschiedliche Einwirkungszeiten des das Material entfernenden Mittels vorgesehen noch mit unterschiedlichen Intensitäten des durch die entsprechende Maske auf das Substrat einwirkenden Mittels gearbeitet werden muss.

Es besteht weiterhin die Möglichkeit, geeignete Linsenstrukturen mittels an sich bekannter holographischer Verfahren herzustellen, wobei man dann Strukturen mit noch geringerer Gittertiefe und etwa sinusförmigen Verlauf erhält, was aber eventuell zu den oben erläuterten Nachteilen führt.

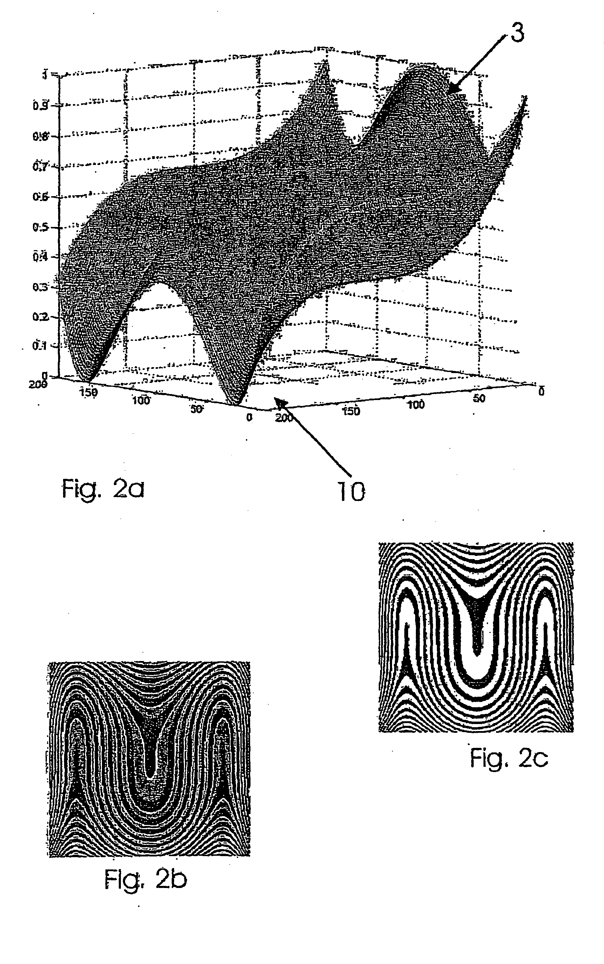

Die Figuren 2a, 3a, 6a und 8a zeigen etwas schematisiert und stark vergrössert sowie in perspektivischer Darstellung jeweils die Ansicht einer als refraktives, nicht erfindungsgemässes Linsenelement ausgebildeten Freiformfläche, d.h. eines Freiformelementes, wobei in den Figuren jeweils nur eine perspektivische Draufsicht auf die zwischen den beiden Schichten 1, 2 vorhandene Grenzfläche 3 des Freiformelementes gezeigt ist, um das Prinzip der Erfindung zu verdeutlichen.

Derartige refraktive Freiformelemente mit hinreichender optischer Auffälligkeit lassen sich dabei nur erzielen, wenn entweder die Dicken der zwischen sich die Grenzfläche 3 einschliessenden Schichten 1, 2 hinreichend gross ist oder wenn die Abmessungen der Freiformfläche parallel zu der gedachten Referenzfläche, z.B. in Figur 2a der Grundfläche 10, hinreichend klein sind weil ja bei refraktiven Freiformelementen die Höhe h des Linsenelementes, wie Figur 1a deutlich erkennen lässt, direkt von den Abmessungen der Freiformfläche in Richtung der x-Achse abhängt.

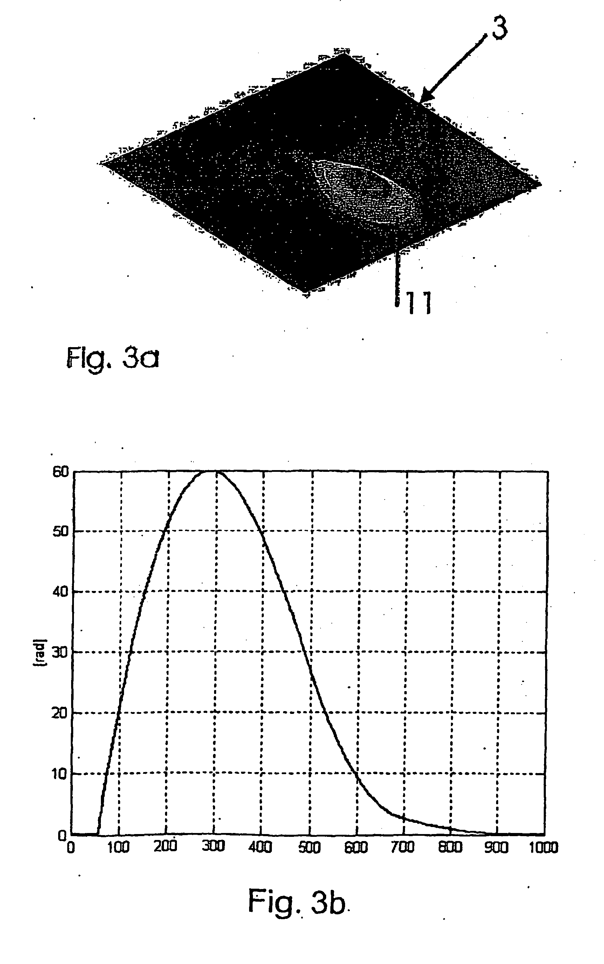

In Figur 3a ist ein tropfenförmiges Freiformelement 11 gezeigt, wobei gemäss der Darstellung der Figur 3a das die tropfenförmige Freiformfläche bildende Freiformelement 11 so konstruiert ist, dass die Freiformfläche nach oben über die ansonsten plane Grenzfläche 3 vorzustehen scheint. Selbstverständlich könnte entsprechend auch der Eindruck erzeugt werden, als ob der von dem Freiformelement 11 gebildete Tropfen nach hinten (unten) über die umgebende Grenzfläche 3 vorstehen würde.

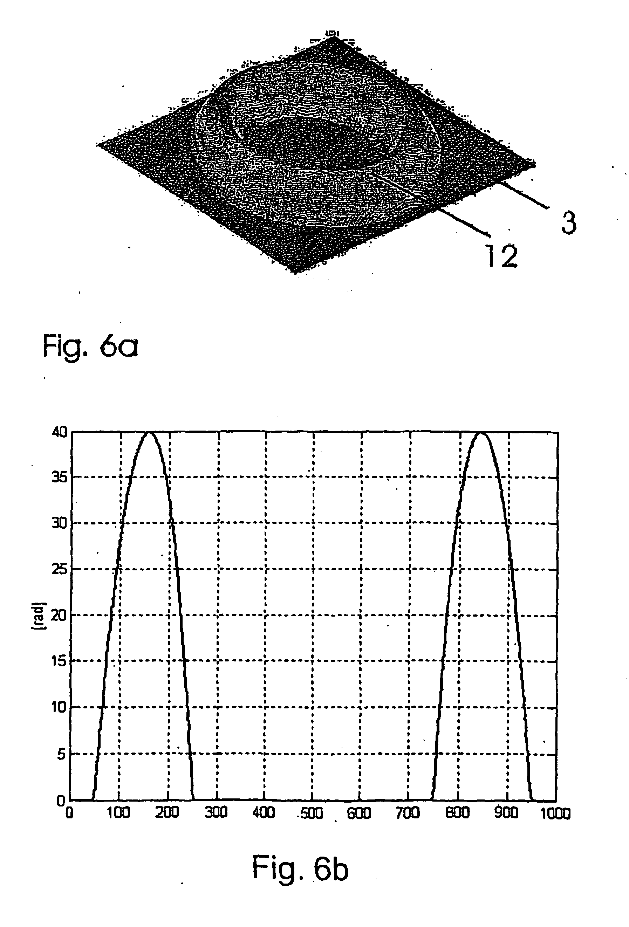

Figur 6a zeigt in einer Darstellung ähnlich Figur 3a ein ringförmiges, refraktives Freiformelement 12, das beispielsweise den Buchstaben "O" symbolisieren oder aber auch nur dekorative Wirkung haben kann.

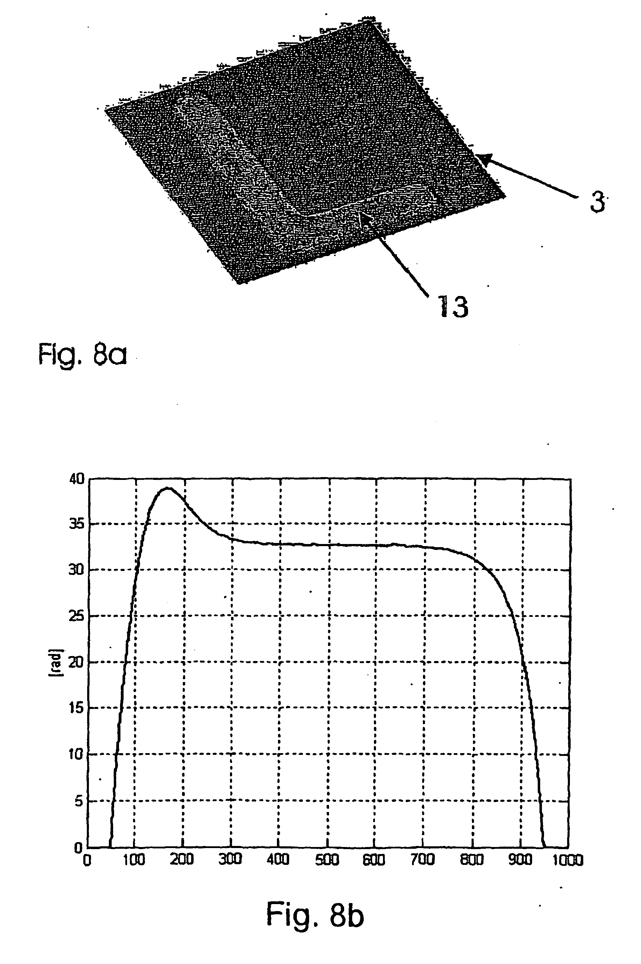

Entsprechend ist in Figur 8a die Grenzfläche 3 perspektivisch dargestellt, die sich ergibt, wenn der Buchstabe "L" durch ein refraktives Freiformelement 13 veranschaulicht wird.

Passend zu den Figuren 3a, 6a und 8a zeigen die Figuren 3b, 6b und 8b jeweils - in etwa geschnitten senkrecht zur gedachten Referenzfläche - den Verlauf der Grenzfläche 3 bei den zugehörigen Freiformelementen 11, 12 und 13, wobei die Bernassung der graphischen Darstellungen der Figuren 3b, 6b und 8b wiederum entsprechend den Figuren 1a bis 1c ist, d.h. auf der x-Achse beliebige Einheiten dargestellt sind, während die Auslenkung senkrecht zur gedachten Referenzfläche auf der y-Achse in Radiant dargestellt ist. Dabei verläuft das Profil der Figur 3b entlang der Symmetrieachse des tropfenförmigen Freiformelementes 11 in Figur 3a, und zwar von rechts unten in Figur 3a nach links oben, d.h. vom gerundeten Bereich zur Spitze des Tropfens. Bezüglich Figur 8b ist das Profil des linken Schenkels des "L", jeweils ebenfalls von rechts unten nach links oben, aufgetragen, wodurch sich - wegen des rechts unten abzweigenden Querschenkels des "L" - die Überhöhung im linken Bereich der Figur 8b ergibt.

Interessant ist nun ein Vergleich der als Freiformelemente dienenden diffraktiven Gitterstrukturen mit den refraktiven Strukturen der Figuren 2a, 3a, 6a und 8a.

Figur 2b zeigt schematisiert und stark vergrössert eine Draufsicht auf die Freiformfläche der Figur 2a, und zwar aus Blickrichtung etwa senkrecht auf die Referenzfläche 10, bei Ausbildung der Freiformfläche als diffraktives Freiformelement mit einer Gitterstruktur mit im wesentlichen den Umrisslinien der Freiformfläche folgenden Gitterlinien, wobei sich der Abstand der Gitterlinien vom Mittelbereich des Freiformelementes aus zu dessen Rand hin kontinuierlich verändert. Ein Vergleich der Figuren 2a und 2b lässt in diesem Zusammenhang auch erkennen, dass der Begriff "Umrisslinien der Freiformfläche" im Sinne der Erfindung nicht unbedingt die tatsächliche Begrenzung der Freiformfläche bedeutet. Es ist vielmehr wichtig, dass die Gitterstrukturen so verlaufen, dass auch die räumliche Gestaltung der Freiformfläche, beispielsweise der unterschiedliche Abstand der Freiformfläche der Figur 2a von der gedachten Referenzfläche 10, entsprechend Berücksichtigung findet.

Figur 2c zeigt in einer ebenfalls der Darstellung der Figur 2b entsprechenden Darstellung die Struktur der Freiformfläche der Figur 2a in Draufsicht, wenn das Linsenelement nicht gemäss Figur 1b von einer Gitterstruktur mit sich kontinuierlich verändernden Gitterfurchen gebildet ist, sondern wenn statt dessen die Gitterstruktur eine Binärstruktur ist, wie sie grundsätzlich in Figur 1c gezeigt ist.

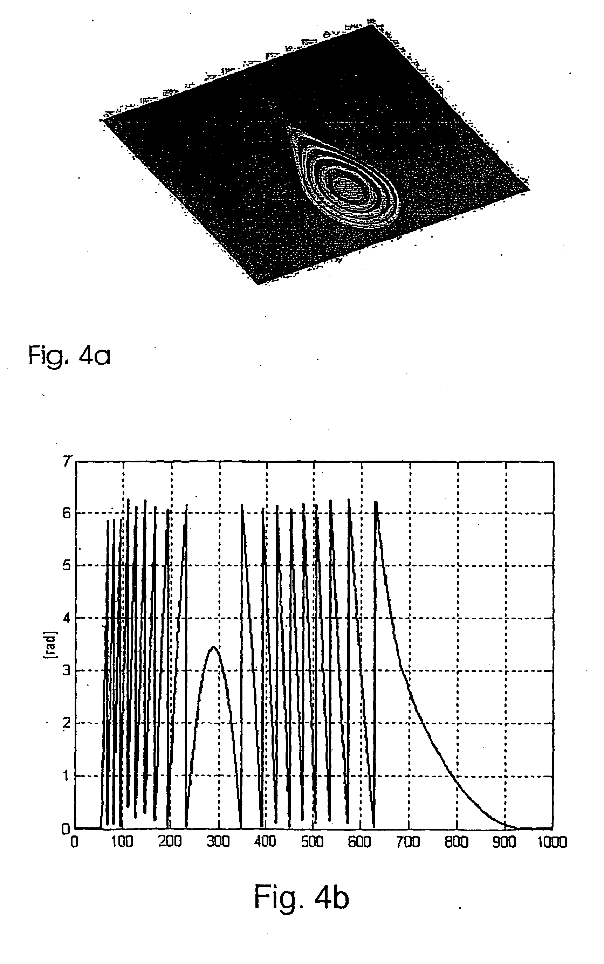

Die Figuren 4a, 7a und 9a zeigen wiederum grundsätzlich den Figuren 3a, 6a und 8a entsprechende Draufsichten auf das tropfenförmige Freiformelement 11, das ringförmige Freiformelement 12 bzw. das L-förmige Freiformelement 13, wobei jedoch das Freiformelement wiederum jeweils nicht als refraktive Linse sondern als diffraktive Gitterstruktur der grundsätzlichen Ausbildung der Figur 1b gestaltet ist.

Die den Figuren 3b, 6b und 8b entsprechenden Schnitte bzw. Höhenprofile sind entsprechend in den Figuren 4b, 7b und 9b gezeigt.

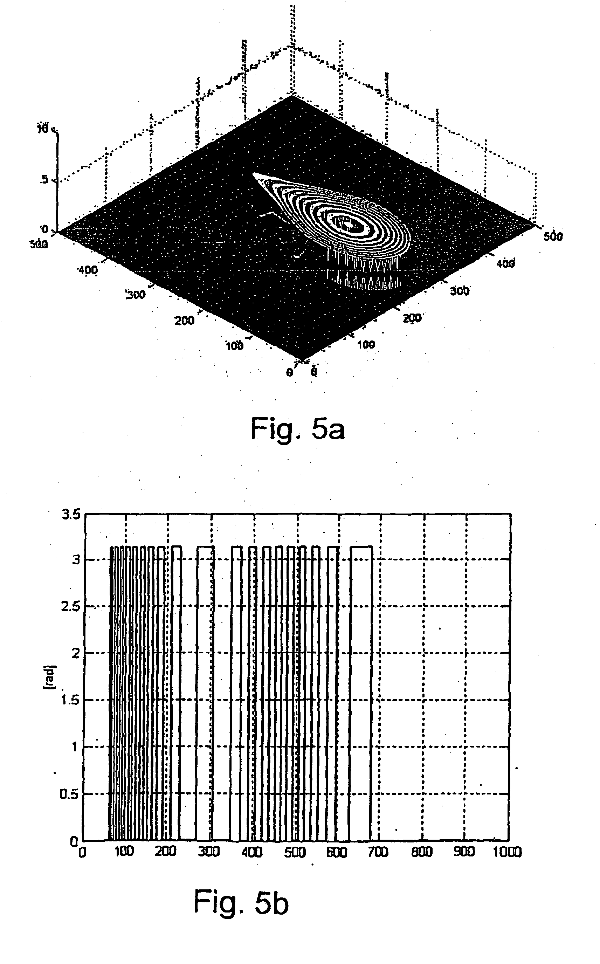

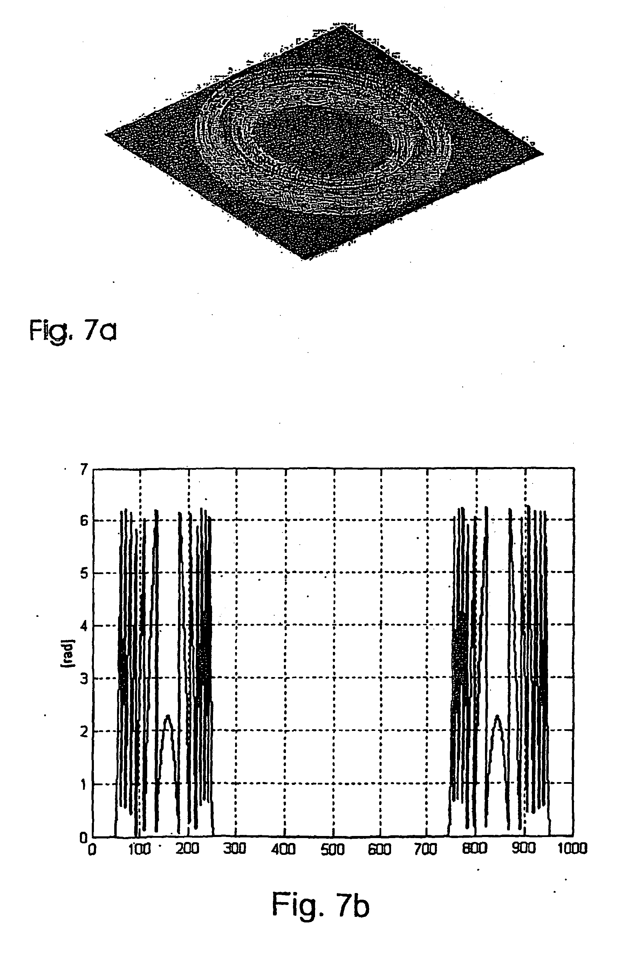

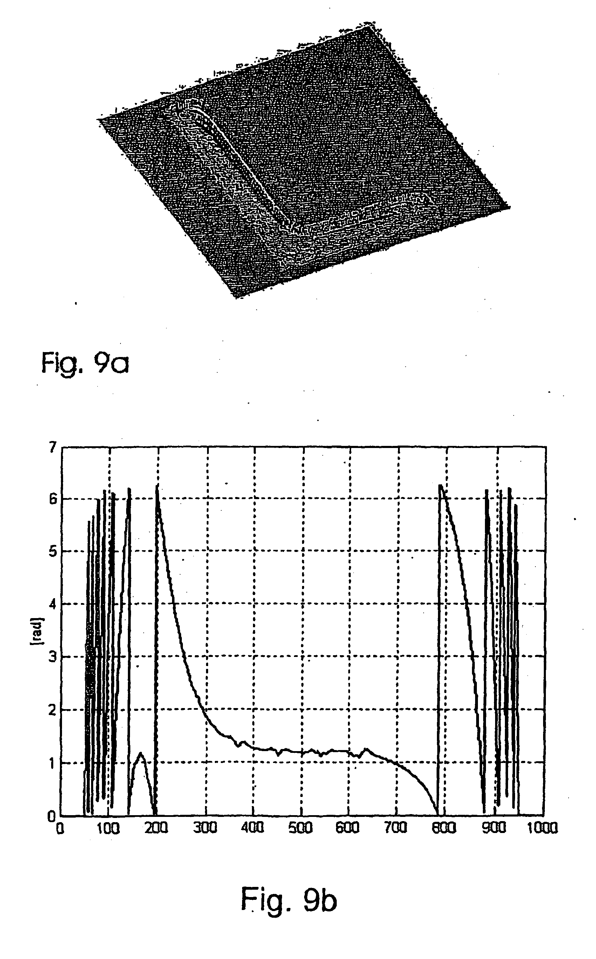

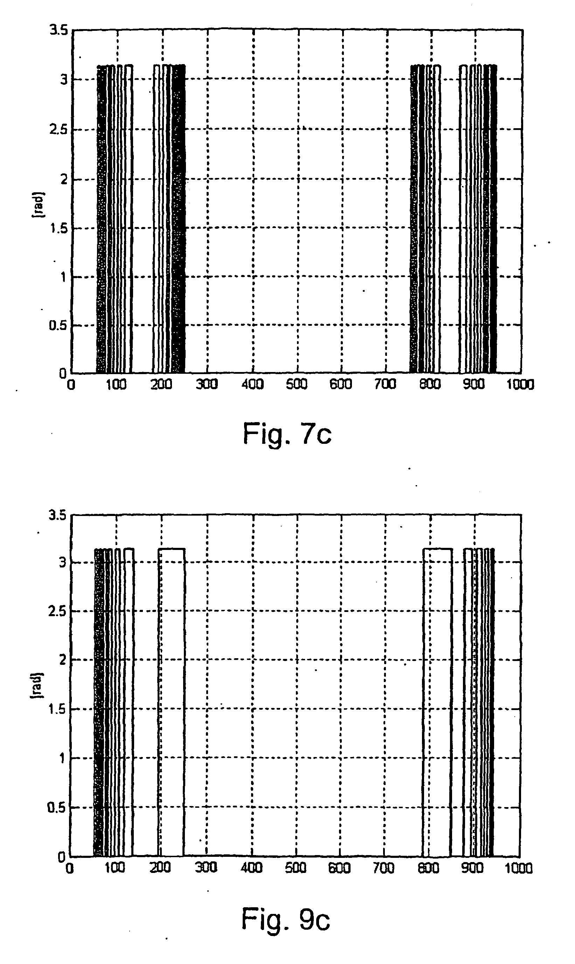

Im Zusammenhang mit der tropfenförmigen Freiformfläche der Figuren 3a bzw. 4a ist in Figur 5a schliesslich noch die Draufsicht bei Gestaltung des Freiformelementes als Binärgitter wiedergegeben, wobei das sich ergebende Höhenprofil der Grenzfläche 3 entsprechend in Figur 5b gezeigt ist. Bezüglich der ringförmigen und L-förmigen Freiformfläche wurde davon abgesehen, eine perspektivische Ansicht der Grenzfläche 3 bei Ausbildung des Freiformelementes als Binärstruktur darzustellen. Die entsprechenden Höhenprofile sind jedoch in den Figuren 7c und 9c (für das ringförmige bzw. L-förmige Freiformelement) gezeigt.

Ein entsprechender Vergleich der Figuren 3b, 6b und 8b mit den Figuren 4b, 7b und 9b bzw. 5b, 7c und 9c zeigt wiederum die deutliche Verminderung der Höhe der Strukturen beim Übergang von einer refraktiven Struktur (Figuren 3b, 6b, 8b) zu einer diffraktiven kontinuierlichen Gitterstruktur (Figuren 4b, 7b und 9b) bzw. einer Binärstruktur (Figuren 5b, 7c und 9c).

In Figur 10 ist schliesslich noch ein Beispiel für eine komplexere Struktur mit von Freiformelementen gebildeten Freiformflächen wiedergegeben. Es handelt sich um eine Gewebe- bzw. Gitterstruktur, bei der die sich kreuzenden Fäden 14 bzw. 15 durch deren Ausbildung als Freiformelemente gemäss der Erfindung betont sind.

Bei den beschriebenen Ausführungsbeispielen handelt es sich nur um vergleichsweise einfache Ausführungsformen, die beispielsweise, wie die Figuren 3 bis 9, jeweils nur ein Freiformelement umfassen. Selbstverständlich ist es möglich, durch entsprechende Kombination unterschiedlicher Freiformelemente optisch variable Elemente auch mit komplexen Effekten zu erzeugen, wobei es insbesondere auch denkbar ist, zusätzlich zu den erfindungsgemässen, linsenartigen Freiformelementen optisch aktive Strukturen, insbesondere diffraktive Strukturen vorzusehen, die völlig andersartige Effekte, beispielsweise Bewegungseffekte, Flips, Bildwechsel, etc. generieren. Es ist auch denkbar, die Freiformelemente oder sonstigen diffraktiven Strukturen mit einer Dünnschichtfolge, speziellen Schichten (z.B. Halbleitern) oder mit speziellen Farben, z.B. iriodisierenden Farben zu kombinieren, um auf diese Weise ganz besondere Farb(wechsel)effekte zu erzielen. Dabei können beispielsweise auch die erfindungsgemässen Freiformelemente z.B. im Sinne des EP-Patentes No. 0 375 833 B1 mit anderen, optisch wirksamen Strukturen oder mehrere Freiformflächen untereinander kombiniert bzw. ineinander verschachtelt werden, so dass für einen Betrachter abwechselnd das oder ein bestimmtes linsenartiges Freiformelement oder eine oder mehrere sonstige, optisch wirksame Strukturen erscheinen, abhängig davon, unter welchem Winkel das entsprechende Substrat betrachtet wird. Eine Kombination der optisch variablen Elemente gemäss der Erfindung mit Druckelementen, Mattstrukturen oder Spiegelflächen ist ebenfalls möglich.

Besonders interessante Gestaltungen der optisch variablen Elemente gemäss der Erfindung lassen sich dann erzielen, wenn die die wirksame Struktur bildende Grenzschicht 3 nur bereichsweise mit einer reflexionserhöhenden Schicht, insbesondere einer Metallisierung, versehen ist, wobei hier beispielsweise eine Demetallisierung im Register mit den Freiformelementen vorgesehen sein kann. Beispielsweise wäre es denkbar, bei den Ausführungsformen der Figuren 3a bis 9a jeweils nur das Freiformelement, d.h. die tropfenförmige Freiformfläche 11 (der Figuren 3a, 4a und 5a), das Ringelement 12 (der Figuren 6a und 7a) oder das L-förmige Element (der Figuren 8a und 9a) mit einer Metallisierung im Bereich der Grenzfläche 3 zu versehen, nicht jedoch die umgebende Grenzfläche zwischen den Schichten 1 und 2. Das gewebeartige, optisch variable Element gemäss Figur 10 könnte durch teilweise Metallisierung ebenfalls interessanter gestaltet werden, wobei z.B. nur die Flächenbereiche der Grenzschicht 3, die die Fäden 14, 15 bilden, metallisiert sein könnten, während in den Zwischenräumen zwischen den Fäden 14, 15 keine Metallisierung vorhanden ist, so dass insoweit das optisch variable Element durchsicht wäre.

Es sei erwähnt, dass die Grenzfläche 3 nicht unbedingt beidseits von einer Lack-oder Kleberschicht begrenzt sein muss. Insbesondere bei Benutzung des optisch variablen Elementes gemäss der Erfindung in Transmission könnte die Grenzfläche 3 auch an Luft angrenzen, wodurch sich eventuell in einfacher Weise die im Bereich der Grenzfläche 3 erforderliche Brechungsindex-Differenz der Schichten beidseits der Grenzfläche 3 erzielen liesse.

Schliesslich kann ein optisch variables Element, gerade weil es relativ flach ist, auch in Kombination mit gedruckten Elementen, z.B. bereichsweise überdruckt, verwendet werden.

## Patentansprüche

1. Optisch variables Element, das wenigstens in Teilflächen eine eine gegenüber einer gedachten Referenzfläche räumlich vor- und/oder zurückspringende, optisch wirksame Struktur bildende Grenzfläche aufweist, wobei die optisch wirksame Struktur wenigstens eine für einen Betrachter dreidimensional erscheinende Freiformfläche in Form eines alphanumerischen Zeichens, einer geometrischen Figur oder eines sonstigen Objekts aufweist, wobei die Freiformfläche von einem linsenartig gestalteten, einen Vergrösserungs-, Verkleinerungs- oder Verzerrungseffekt erzeugenden, ein Freiformelement (11, 12, 13, 14, 15) bildenden Teilbereich der Grenzfläche (3) gebildet ist, wobei der die Freiformfläche bildende Bereich gegenüber der Substrat-Oberfläche vorgewölbt oder zurückspringend erscheint, d.h. so, als ob im Bereich der Freiformfläche eine gewölbte Oberfläche vorhanden wäre, und wobei die Grenzfläche (3) im Bereich des Freifomnelements (11, 12, 13, 14, 15) mit einer diffraktiven Gitterstruktur, deren Gittertiefe höchstens 10µm beträgt, ausgebildet ist, deren Gitterlinien im wesentlichen den Umrisslinien der Freiformfläche folgen, wobei sich der Abstand der Gitterlinien vom Mittelbereich (6) der Freiformfläche aus zu deren Rand hin kontinuierlich verändert.

2. Optisch variables Element nach Anspruch 1, **dadurch gekennzeichnet, dass** die Grenzfläche (3) zwischen zwei Schichten (1, 2) eines Schichtverbundes eingebettet isßt.

3. Optisch variables Element nach Anspruch 1 und 2, **dadurch gekennzeichnet, dass** wenigstens eine der zwischen sich die Grenzfläche (3) einschließenden Schichten (1, 2) gefärbt ist.

4. Optisch variables Element nach einem der Ansprüche 1 bis 3,
**dadurch gekennzeichnet ,**
**dass** die Gitterstruktur des Freiformelementes derart gestaltet ist, dass die jeweils einen Flanken (7) ihrer Gitterfurchen (5) parallel zueinander und etwa parallel zu einer Senkrechten (S) auf die Referenzfläche (10) verlaufen, während sich der Winkel (α) der jeweils anderen Flanken (4) der Gitterfurchen (5) gegenüber der Senkrechten (S) auf die Referenzfläche (10) in einer Richtung quer zu den Gitterlinien im wesentlichen kontinuierlich von Gitterfurche (5) zu Gitterfurche (5) ändert.

5. Optisch variables Element nach Anspruch 4,
**dadurch gekennzeichnet,**
**dass** die unter einem Winkel (α) zu der Senkrechten (S) auf die Referenzfläche (10) verlaufenden Flanken (4) der Gitterfurchen (5) stufenförmig gestaltet sind, wobei durch die die Stufen bildenden Flächen die Flanken (4) in ihrer optischen Wirkung angenähert sind.

6. Optisch variables Element nach einem der Ansprüche 1 bis 3,
**dadurch gekennzeichnet,**
**dass** die Gitterstruktur des Freiformelementes eine Binärstruktur (Figur 1c) ist, die im Querschnitt im wesentlichen rechteckige Gitterfurchen (8) und Gitterstege (9) aufweist.

7. Optisch variables Element nach Anspruch 6,
**dadurch gekennzeichnet ,**
**dass** die Tiefe (h) der Gitterfurchen (8) der Gitterstruktur des Freiformelementes über die gesamte Freiformfläche (11, 12, 13, 14, 15) etwa gleich ist.

8. Optisch variables Element nach einem der vorhergehenden Ansprüche,
**dadurch gekennzeichnet ,**
**dass** die Freiformfläche (11, 12, 13, 14, 15) Teil einer optisch wirksamen Gesamt-Strukturanordnung ist, die neben dem Freiformelement Teilbereiche mit für den Betrachter unterschiedliche optische Effekte erzeugenden, optisch variablen Elementen umfasst.

9. Optisch variables Element nach einem der vorhergehenden Ansprüche,
**dadurch gekennzeichnet ,**
**dass** die optisch wirksame Struktur vollständig oder bereichsweise mit einer Dünnschichtanordnung kombiniert ist.

10. Optisch variables Element nach einem der vorhergehenden Ansprüche,
**dadurch gekennzeichnet ,**
**dass** die die optisch wirksame Struktur bildende Grenzfläche (3) zumindest bereichsweise mit einer reflexionserhöhenden Beschichtung versehen ist.

11. Optisch variables Element nach Anspruch 10,
**dadurch gekennzeichnet ,**
**dass** die reflexionserhöhende Beschichtung von einer Metallschicht gebildet ist.

12. Optisch variables Element nach Anspruch 10 oder 11,
**dadurch gekennzeichnet ,**
**dass** die reflexionserhöhende Beschichtung in Passerung zu dem wenigstens einen Freiformelement (11, 12, 13, 14, 15) vorgesehen ist.

13. Optisch variables Element nach Anspruch 11 und 12,
**dadurch gekennzeichnet ,**
**dass** die Passerung durch bereichsweise Demetallisierung der Grenzschicht (3) erzeugt ist.

14. Verwendung eines optisch variablen Elementes nach einem der vorhergehenden Ansprüche als Sicherheitselement gegen Fälschung von Wertdokumenten oder für zu sichernde Gegenstände.

15. Verwendung nach Anspruch 14,
**dadurch gekennzeichnet,**
**dass** das optisch variable Element in die auf ein Substrat übertragbare Dekor-Schichtanordnung einer Transferfolie, insbesondere einer Heissprägefolie, inkorporiert ist.

16. Verwendung nach Anspruch 14,
**dadurch gekennzeichnet,**
**dass** das optisch variable Element in die Dekor-Schichtanordnung einer Laminierfolie inkorporiert ist.

## Claims

1. Optically variable element which, at least in partial areas, has an interface which is set forward and/or back spatially with respect to an imaginary reference surface and forms an optically active structure, the optically active structure having at least one free-form area appearing three-dimensional to a viewer in the form of an alphanumeric symbol, a geometric figure or another object, the free-form area being formed by a subregion of the interface (3) which is configured in the manner of a lens, produces a magnifying, reducing or distorting effect and forms a free-form element (11, 12, 13, 14, 15), the region which forms the free-form area appearing to be curved forward or set back with respect to the substrate surface, that is to say as if there were a curved surface in the region of the free-form area, and the interface (3) in the region of the free-form element (11, 12, 13, 14, 15) being formed with a diffractive grid structure whose grid depth is at most 10 µm and whose grid lines substantially follow the outlines of the free-form area, the distance of the grid lines from the central region (6) of the free-form area varying continuously towards its edge.

2. Optically variable element according to Claim 1, **characterized in that** the interface (3) is embedded between two layers (1, 2) of a layer composite.

3. Optically variable element according to Claim 1 and 2, **characterized in that** at least one of the layers (1, 2) enclosing the interface (3) between them is coloured.

4. Optically variable element according to one of Claims 1 to 3, **characterized in that** the grid structure of the free-form element is configured in such a way that the respective first flanks (7) of its grid furrows (5) run parallel to one another and approximately parallel to the perpendicular (S) to the reference surface (10), while the angle (α) of the respective other flanks (4) of the grid furrows (5) with respect to the perpendicular (S) to the reference surface (10) changes substantially continuously from grid furrow (5) to grid furrow (5) in a direction transverse with respect to the grid lines.

5. Optically variable element according to Claim 4, **characterized in that** the flanks (4) of the grid furrows (5) running at an angle (α) to the perpendicular (S) to the reference surface (10) are configured in the form of steps, the flanks (4) being approximated in their optical effect by the areas forming the steps.

6. Optically variable element according to one of Claims 1 to 3, **characterized in that** the grid structure of the free-form element is a binary structure (Figure 1c), which, in cross section, has substantially rectangular grid furrows (8) and grid ridges (9).

7. Optically variable element according to Claim 6, **characterized in that** the depth (h) of the grid furrows (8) of the grid structure of the free-form element is approximately the same over the entire free-form area (11, 12, 13, 14, 15).

8. Optically variable element according to one of the preceding claims, **characterized in that** the free-form area (11, 12, 13, 14, 15) is part of an optically active overall structure arrangement which, in addition to the free-form element, comprises subregions with optically variable elements that produce optical effects that are different for the viewer.

9. Optically variable element according to one of the preceding claims, **characterized in that** the optically active structure is combined with a thin layer arrangement, completely or in some regions.

10. Optically variable element according to one of the preceding claims, **characterized in that** the interface (3) forming the optically active structure is provided with a reflection-increasing coating, at least in some regions.

11. Optically variable element according to Claim 10, **characterized in that** the reflection-increasing coating is formed by a metal layer.

12. Optically variable element according to Claim 10 or 11, **characterized in that** the reflection-increasing coating is provided in register with the at least one free-form element (11, 12, 13, 14, 15).

13. Optically variable element according to Claims 11 and 12, **characterized in that** the registration is provided by demetallizing the interface (3) in some regions.

14. Use of an optically variable element according to one of the preceding claims as a security element against forgery of valuable documents or for objects to be safeguarded.

15. Use according to Claim 14, **characterized in that** the optically variable element is incorporated into the decorative layer arrangement of a transfer film, in particular a hot embossing film, which can be transferred to a substrate.

16. Use according to Claim 14, **characterized in that** the optically variable element is incorporated into the decorative layer arrangement of a laminating film.

## Revendications

1. Elément optiquement variable qui comprend au moins sur des surfaces partielles une surface limite formant une structure optiquement active qui s'avance ou qui recule dans l'espace par rapport à une surface de référence imaginaire, la structure optiquement active comprenant au moins une surface librement modulable sous la forme d'un signe alphanumérique, d'une figure géométrique ou d'un autre objet apparaissant de manière tridimensionnelle à un observateur, la surface librement modulable étant formée par une zone partielle de la surface limite (3) conçue en forme de lentille, générant un effet d'agrandissement, de rétrécissement ou de déformation et formant un élément librement modulable (11, 12, 13, 14, 15), la zone formant la surface librement modulable apparaissant précourbée ou reculant par rapport à la surface du substrat, c'est-à-dire comme si une surface courbée était présente dans la zone de la surface librement modulable et la surface limite (3) étant réalisée dans la zone de l'élément librement modulable (11, 12, 13, 14, 15) qui comprend une structure de grille diffractive dont la profondeur de grille est d'au maximum 10 µm et qui est muni de lignes de grilles qui suivent sensiblement les lignes des contours de la surface librement modulable, alors que l'espacement des lignes de grilles depuis la zone médiane (6) de la surface librement modulable jusqu'à son bord change en continu.

2. Elément optiquement variable selon la revendication 1, **caractérisé en ce que** la surface limite (3) est enrobée entre deux couches (1, 2) d'un composé de couches.

3. Elément optiquement variable selon les revendications 1 et 2, **caractérisé en ce qu'**au moins une des couches (1, 2) renfermant entre elles la surface limite (3) est teintée.

4. Elément optiquement variable selon l'une quelconque des revendications 1 à 3, **caractérisé en ce que** la structure de grille de l'élément librement modulable est conçue de telle façon que les flancs (7) respectivement au nombre d'un de ses rainures de grille (5) s'étendent parallèlement entre eux et à peu près parallèlement à une ligne verticale (S) en direction de la surface de référence (10), alors que, par rapport à la ligne verticale (S), l'angle (α) de l'autre flanc respectif (4) des rainures de grille (5) change en direction de la surface de référence (10) sensiblement de manière continue de rainure de grille (5) à rainure de grille (5) dans une direction transversale par rapport aux lignes de grille.

5. Elément optiquement variable selon la revendication 4, **caractérisé en ce que** les flancs (4) des rainures de grille (5) s'étendant avec un angle (α) par rapport à la ligne verticale (S) en direction de la surface de référence (10) sont conçus en forme de gradins, les flancs (4) étant rapprochés de leur effet optique par les surfaces formant les gradins.

6. Elément optiquement variable selon l'une quelconque des revendications 1 à 3, **caractérisé en ce que** la structure de grille de l'élément librement modulable est une structure binaire (figure 1c), dont la section comprend sensiblement des rainures de grille (8) et des parois de grille (9) rectangulaires.

7. Elément optiquement variable selon la revendication 6, **caractérisé en ce que** la profondeur (h) des rainures de grille (8) de la structure de grille de l'élément librement modulable est à peu près égale sur la totalité de la surface librement modulable (11, 12, 13, 14, 15).

8. Elément optiquement variable selon l'une quelconque des revendications précédentes, **caractérisé en ce que** la surface librement modulable (11, 12, 13, 14, 15) est une partie d'un système de structure d'ensemble optiquement actif qui, à côté de l'élément librement modulable, comprend des zones partielles avec des éléments optiquement variables générant des effets optiques différents pour l'observateur.

9. Elément optiquement variable selon l'une quelconque des revendications précédentes, **caractérisé en ce que** la structure optiquement active est combinée entièrement ou par zones avec un système à couches minces.

10. Elément optiquement variable selon l'une quelconque des revendications précédentes, **caractérisé en ce que** la surface limite (3) formant la structure optiquement active est munie au moins par zones d'un revêtement accroissant la réflexion.

11. Elément optiquement variable selon la revendication 10, **caractérisé en ce que** le revêtement accroissant la réflexion est formé par une couche métallique.

12. Elément optiquement variable selon la revendication 10 ou 11, **caractérisé en ce que** le revêtement accroissant la réflexion est prévu comme passage vers l'au moins un élément librement modulable (11, 12, 13, 14, 15).

13. Elément optiquement variable selon les revendications 11 et 12, **caractérisé en ce que** le passage est réalisé par un démétallisation par zones de la couche limite (3).

14. Utilisation d'un élément optiquement variable selon l'une quelconque des revendications précédentes en tant qu'élément de sécurité contre la falsification de documents de valeur ou pour des objets à sécuriser.

15. Utilisation selon la revendication 14, **caractérisée en ce que** l'élément optiquement variable est incorporé dans le système de couches de décoration d'un film de transfert pouvant être transmis sur un substrat, en particulier d'un film d'impression à chaud.

16. Utilisation selon la revendication 14, **caractérisée en ce que** l'élément optiquement variable est incorporé dans le système de couches de décoration d'un film de plaquage.
